# EUROPÄISCHE PATENTANMELDUNG

(11) **EP 1 579 946 A2**
(43) Veröffentlichungstag der Anmeldung: **28.09.2005**
(21) Anmeldenummer: 05006218.1
(22) Anmeldetag: 22.03.2005
(51) Int. Cl.: B23K 37/04

(54) **Vorrichtungsbausytem**

(30) Priorität: 24.03.2004 DE 102004014844
(71) Anmelder: seltra Natursteinhandel GmbH, 72622 Nürtingen (DE)
(72) Erfinder: Thumm, Uwe, 72622 Nürtingen (DE)
(74) Vertreter: Dreiss, Fuhlendorf, Steimle & Becker

(57) **Zusammenfassung**

Es wird ein Vorrichtungsbausystem vorgeschlagen, bei dem mit Hilfe von einfachen plattenförmigen Grundelementen 1 beliebige dreidimensionale Vorrichtungen aufgebaut werden können. An diese Vorrichtungen können verschiedene Befestigungselemente angebracht werden. Dadurch ist es möglich, auf einfachste Weise Vorrichtungen mit nahezu beliebiger Geometrie herzustellen, die sehr genau und sehr belastbar sind und außerdem preiswert in der Herstellung sind.

## Beschreibung

Die Erfindung geht aus von einem Schweißtisch mit mehreren gleichmäßig voneinander beabstandeten ersten Rasterlinien, mit mehreren gleichmäßig voneinander beabstandeten zweiten Rasterlinien, wobei die ersten Rasterlinien mit den zweiten Rasterlinien einen Winkel von 90° einschließen, und mit mehreren gleichmäßig voneinander beabstandeten Befestigungsbohrungen. Solche Schweißtische werden eingesetzt, um Spann- oder Klemmvorrichtungen bereitzustellen, die beim Verschweißen von mehreren Einzelteilen zu einem Bauteil eingesetzt werden können.

Aber nicht nur beim Schweißen, sondern in nahezu allen Bereichen der industriellen Serienfertigung, insbesondere in der metallverarbeitenden Industrie, werden sehr oft Vorrichtungen benötigt, um ein aus mehreren Einzelteilen zusammengesetztes Bauteil herzustellen. Oft müssen auch fertige Bauteile nach deren Herstellung vermessen werden. Auch dazu müssen oft aufwendige dreidimensionale Messvorrichtungen oder Lehren gebaut werden. Die Kosten für solche Vorrichtungen sind in der Regel erheblich, da es sich um Einzelanfertigungen handelt.

Aus der EP 0 541 904 A1 ist ein Schweißtisch mit gleichmäßig über seine Tischfläche verteilten Befestigungsbohrungen bekannt. Diese Befestigungsbohrungen dienen dazu verschiedene Befestigungselemente, wie Anschlagwinkel, Spannpratzen, Schraubzwingen so zu positionieren, dass verschiedenste Werkstücke auf dem Schweißtisch zusammengesetzt, anschließend fest gespannt oder geklemmt werden können und in dieser fixierten Position schließlich verschweißt werden können. Nachteilig an diesem Schweißtisch ist, dass er, wie jeder andere Tisch auch, im Wesentlichen ein zweidimensionales Gebilde darstellt, so dass der Aufbau von dreidimensionalen Spanneinrichtungen zusätzlich zu den ohnehin benötigten Schnellspannern und Schraubzwingen eine Vielzahl weiterer Bauelemente, wie Aufspannwinkel, Distanzhülsen und anderes mehr, erfordert. Um eine dreidimensionale Spannvorrichtung bauen zu können, werden eine Vielzahl verschiedenster Bauelemente in unterschiedlichen Abmessungen benötigt.

Außerdem ist der Tisch relativ aufwendig in der Herstellung und sehr schwer. Schließlich bleibt zu erwähnen, dass wegen der hohen Kosten dieses Schweißtisches und der benötigten Bauteile nach dem Fertigen einer Serie die auf dem Schweißtisch aufgebaute Schweißvorrichtung wieder abgebaut wird, um den Schweißtisch für andere Aufgaben frei zu machen. Dies bedeutet, dass mit jedem neuen Serienanlauf die Schweißvorrichtung erneut aufgebaut, kontrolliert und eingerichtet werden muss.

Eine ähnliche Lösung ist auch aus der US 6,375,177 B1 bekannt. Bei dieser Aufspannplatte weisen die Befestigungsbohrungen an ihrem einen Ende eine konkave Vertiefung auf. Nur diese Vertiefung und nicht die gesamte Befestigungsbohrung werden mit hoher Genauigkeit bearbeitet. Zwischen den Befestigungsbohrungen sind Aussparungen mit einem sternförmigen Querschnitt vorgesehen. In diesen Aussparungen können Befestigungselemente ähnlich wie bei einem Bajonettverschluss befestigt werden.

Aus der DE 40 38 968 A1 ist eine Aufspannvorrichtung mit kreuzweise verlaufenden T-Nuten bekannt. In regelmäßigen Abständen sind in die T-Nuten Befestigungslöcher eingebracht, die jedoch nur bis zum Grund der T-Nuten reichen.

Allen diesen Lösungen ist gemeinsam, dass die sehr aufwändig in der Herstellung sind und die gewünschte Flexibilität und Stabilität der Aufspannvorrichtung im Wesentlichen nur in einer parallel zur Tischplatte bzw. Aufspannplatte verlaufenden Ebene erreicht wird.

Der Erfindung liegt die Aufgabe zu Grunde, ein Vorrichtungsbausystem bereitzustellen, welches kostengünstig, einfach und flexibel einsetzbar ist. Das erfindungsgemäße Vorrichtungsbausystem soll außerdem auf einfache Weise die Herstellung genauer Vorrichtungen ermöglichen. Dabei sollen die Kosten dieses Vorrichtungsbausystems so gering sein, dass nach Möglichkeit jede für die Fertigung eines bestimmten Bauteils hergestellte Spann- oder Messvorrichtung nach Gebrauch nicht wieder zerlegt werden muss, so dass beim erneuten Serienanlauf lediglich die bereits vorhandene Spannvorrichtung aus dem Lager hervorgeholt werden muss und an der entsprechenden Maschine oder Montagestation aufgestellt werden muss. Dadurch ergeben sich erhebliche Kosteneinsparungen, die Rüstzeiten werden drastisch verkürzt und auch die Möglichkeit von fehlerhaften Nachserien wird deutlich reduziert.

Diese Aufgabe wird erfindungsgemäß gelöst durch ein plattenförmiges Grundelement für ein Vorrichtungsbausystem mit mehreren gleichmäßig voneinander beabstandeten ersten Rastenlinien, mit mehreren gleichmäßig voneinander beabstandeten zweiten Rasterlinien, wobei die ersten Rasterlinien mit den zweiten Rasterlinien einen Winkel von 90° einschließen, mit mehreren gleichmäßig voneinander beabstandeten Befestigungsbohrungen, wobei an mehreren Kreuzungspunkten der Rasterlinien mindestens ein rechteckiger Durchbruch vorgesehen ist.

In vorteilhafter Ausgestaltung des erfindungsgemäßen Grundelements ist vorgesehen, dass an jedem zweiten Kreuzungspunkt zwei rechtwinklig zueinander verlaufende Durchbrüche vorgesehen sind.

Eine weitere vorteilhafte Ausgestaltung des erfindungsgemäßen Grundelements sieht vor, dass die Kreuzungspunkte aller ersten Rastenlinien mit einer zweiten Rasterlinie eine erste Kreuzungspunktlinie bilden, dass an jedem zweiten Kreuzungspunkt der ersten Kreuzungspunktlinie ein in Richtung der zweiten Rasterlinie verlaufende Durchbruch angeordnet ist, dass die benachbart zu der ersten Kreuzungspunktlinie angeordneten Kreuzungspunkte aller ersten Rasterlinien mit einer zweiten Rasterlinie eine zweite Kreuzungspunktlinie bilden, dass an jedem Kreuzungspunkt der zweiten Kreuzungspunktlinie ein in Richtung der ersten Rasterlinie verlaufender Durchbruch angeordnet ist, und dass sich erste Kreuzungspunktlinien und zweite Kreuzungspunktlinien abwechseln.

Schließlich ist bei einer dritten vorteilhaften Ausgestaltung des erfindungsgemäßen Grundelements an jedem Kreuzungspunkt ein Durchbruch vorgesehen, wobei die Durchbrüche abwechselnd in Richtung der ersten Rasterlinien und in Richtung der zweiten Rasterlinien verlaufen.

Mit Hilfe dieser drei Ausgestaltungen der erfindungsgemäßen Grundplatte können sowohl zweidimensionale als auch dreidimensionale Gebilde auf einfachste Weise hergestellt werden, da verschiedene plattenförmige Grundelemente in die Durchbrüche eines anderen Grundelements eingesteckt werden können. Dadurch ergibt sich zwischen den zwei plattenförmigen Grundelementen eine rechtwinklige und formschlüssige Verbindung. Durch das Ansetzen weiterer plattenförmiger Grundelemente kann aus diesem Winkelstück beispielsweise ein Quader, ein Rechteck oder eine andere, nahezu beliebig kompliziert geformte dreidimensionale Vorrichtung entstehen.

Da an jeder Oberfläche dieser solchermaßen individuell hergestellten Vorrichtung Befestigungsbohrungen vorhanden sind, können dort die aus dem Stand der Technik bekannten Spannelemente, wie Niederhalter, Vertikalspanner, Horizontalspanner, Schraubzwingen, aber auch Anschläge oder Aufnahmen für das herzustellende Bauteil angeordnet werden.

Auf Grund der Dreidimensionalität und der formschlüssigen Verbindung zwischen jeweils zwei plattenförmigen erfindungsgemäßen Grundelementen ergibt sich eine sehr hohe Steifigkeit und Torsionsfestigkeit der aus erfindungsgemäßen plattenförmigen Grundelementen aufgebauten Vorrichtungen. Selbstverständlich können aus den erfindungsgemäßen Grundelementen bei Bedarf auch Versteifungselemente, wie zum Beispiel Versteifungsrippen oder -winkel hergestellt werden.

Dadurch ist die Vorrichtung für nahezu alle Einsatzzwecke bestens geeignet, unabhängig davon, wie groß die auf die Vorrichtung wirkenden Kräfte sind.

Das erfindungsgemäße Vorrichtungsbausystem kann unter anderem auch in der spanenden Bearbeitung, im Modellbau, in der Lagertechnik, in Laboren, im Modellbau sowie zur Herstellung von Möbeln oder als Spielzeugbaukasten eingesetzt werden.

Je nach dem wie groß die auf die aus erfindungsgemäßen Grundelementen aufgebauten Vorrichtung wirkenden Kräfte sind, können die Grundelemente nachdem sie formschlüssig gefügt wurden, durch Schweißen, Schrauben, Nieten, Kleben oder mit Hilfe von Magneten miteinander verbunden werden.

Durch die formschlüssige Verbindung der plattenförmigen Grundelemente ist die Genauigkeit der mit erfindungsgemäßen Grundelementen hergestellten Vorrichtung nahezu unabhängig von der Größe der Vorrichtung und bewegt sich im Bereich von etwa einem Zehntel Millimeter.

Da jede individuelle Vorrichtung aus einem plattenförmigen Grundelement, welches als Plattenware beim Anwender lagermäßig vorhanden ist, hergestellt wird, können Vorrichtungen sehr rasch und ohne aufwendige Konstruktionszeichnungen hergestellt werden.

Es ist beispielsweise möglich um einen bereits vorhandenen Prototyp des später in Serie zu fertigenden Bauteils herum die Vorrichtung zu bauen. Dann werden aus der vorhandenen Plattenware individuelle Grundelemente nach Bedarf zugeschnitten. Dabei ist besonders vorteilhaft, dass die Genauigkeit der zu bauenden Vorrichtung nicht von dem Zuschnitt der Grundelemente abhängt, sondern die Genauigkeit von den in der Plattenware bereits vorhandenen Durchbrüchen vorgegeben wird. Deshalb ist es beispielsweise ohne weiteres möglich, aus einer vorhandenen Platte mit einer Nippelmaschine, einer Stichsäge oder selbst mit einer Trennschleifmaschine die erforderlichen Grundelemente auszuschneiden, ohne Beeinträchtigungen bei der Genauigkeit der zu bauenden Vorrichtung.

Da nahezu jeder beliebige dreidimensionale Körper aus den zuvor beschriebenen plattenförmigen Grundelementen hergestellt werden kann, ist kein großes Lager mit erfindungsgemäßen plattenförmigen Grundelementen erforderlich, um bei Bedarf in kürzester Zeit eine sehr genaue, mechanisch hoch belastbare und kostengünstige Vorrichtung individuell herzustellen. Dies ist ein besonderer Vorteil, wenn man sich vor Augen hält, dass in der Regel der Werkzeug- und Vorrichtungsbau in industriellen Betrieben stets sehr gut ausgelastet ist und mit Hilfe der erfindungsgemäßen Grundelemente auf einfachste Weise schnell und mit hoher Präzision Vorrichtungen gebaut werden können oder bereits vorhandene Vorrichtungen ergänzt oder geändert werden können.

Weitere vorteilhafte Ausgestaltungen der Erfindung sehen vor, dass in Ergänzung eines Grundelements nach Anspruch 2 an den anderen, das heißt nicht mit einem Durchbruch versehenen, Kreuzungspunkten mindestens ein Langloch oder eine Spannbohrung vorgesehen ist. In Ergänzung des Grundelements nach Anspruch 4 kann außerdem vorgesehen sein, dass an den verbleibenden Kreuzungspunkten der zweiten Kreuzungspunktlinie mindestens ein Langloch oder eine Spannbohrung vorgesehen ist. Schließlich kann in Ergänzung eines Grundelements nach Anspruch 6 vorgesehen sein, dass an einem Kreuzungspunkt K_{i,j} anstelle eines Durchbruchs mindestens ein Langloch oder eine Spannbohrung vorgesehen ist, dass an einem weiteren Kreuzungspunkt K_{r,s} anstelle eines Durchbruchs mindestens ein Langloch oder eine Spannbohrung vorgesehen ist, und dass gilt r = i +/-1 und s = j +/-2.

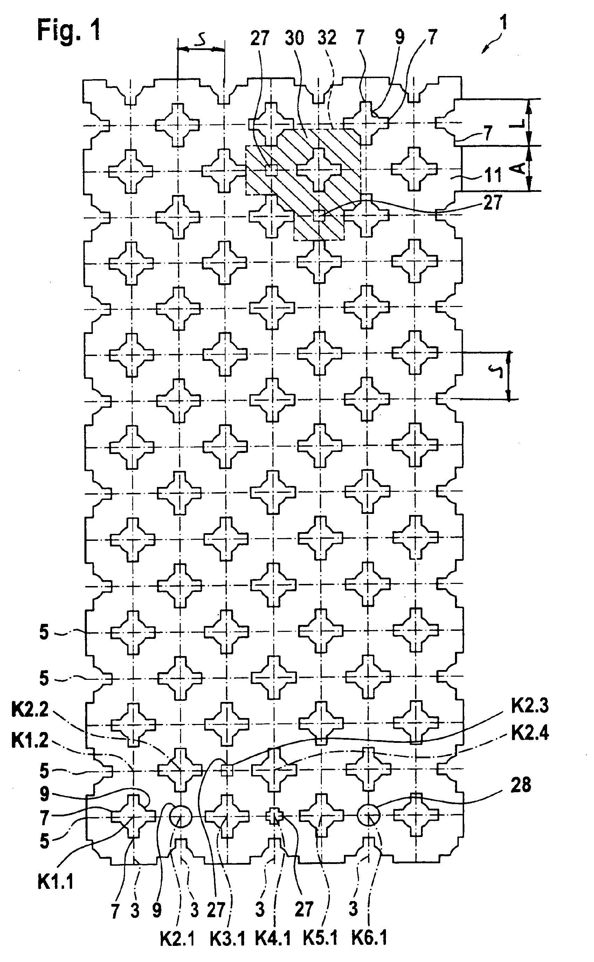

Durch diese Ausgestaltungen ist es ohne weiteres möglich, aus den Grundelementen sogenannte Eckverbinder auszuschneiden, wie sie beispielsweise in den Figuren 1, 2 sowie 17 bis 21 dargestellt und weiter unten ausführlich erläutert sind.

Um an einem solchen Eckverbinder bestmöglich andere Bauteile, wie Schnellspanner, Endanschläge, Schraubzwingen und anderes mehr befestigen zu können, kann in weiterer Ergänzung benachbart zu dem mindestens einen Langloch oder der Spannbohrung anstelle eines Durchbruchs eine Befestigungsbohrung vorgesehen sein.

Es hat sich als besonders vorteilhaft erwiesen, wenn ein Abstand der Rasterlinien voneinander einem ganzzahligen Vielfachen der einer Dicke des Grundelements, insbesondere, dem Dreifachen, dem Fünffachen oder dem Siebenfachen der Dicke des Grundelements, entspricht. Dadurch kann die Flexibilität der erfindungsgemäßen Grundelemente weiter verbessert werden.

Es hat sich ebenfalls als vorteilhaft erwiesen, wenn eine Längsachse der Durchbrüche parallel zu einer Rasterlinie verläuft.

Die Kompatibilität der verschiedenen Grundelemente miteinander wird weiter gesteigert, wenn eine Breite der Durchbrüche der Dicke des Grundelements entspricht, und/oder wenn eine Länge der Durchbrüche einem ganzzahligen Vielfachen der Dicke des Grundelements, insbesondere dem Dreifachen, dem Fünffachen oder dem Siebenfachen der Dicke, entspricht.

Um eine hochpräzise und formschlüssige Verbindung der Grundelemente miteinander zu ermöglichen, sind die Ecken der Durchbrüche, insbesondere mittels eines Radius', ausgespart. Diese Aussparungen haben die Funktion eines "Freistichs", so dass der Formschluss zwischen zwei Grundelementen nur über die gradlinigen Kanten des rechteckigen Durchbruchs erfolgt und nicht von der Ausgestaltung der Ecken der Durchbrüche abhängt.

Es hat sich weiter als vorteilhaft erwiesen, wenn die Befestigungsbohrungen zueinander den gleichen Abstand wie die Rasterlinien aufweisen. Dabei ist es möglich die Befestigungsbohrungen auf einer Rasterlinie, einem Kreuzungspunkt zweier Rasterlinien oder zwischen den Rasterlinien anzuordnen.

Besonders vorteilhaft ist es, wenn das Grundelement als Plattenware, insbesondere mit den Abmessungen handelsüblicher Blechplatten, von beispielsweise 1000 mm x 2000 mm, hergestellt wird. Dann nämlich ist es möglich, aus handelsüblicher Plattenware durch das Einbringen der erfindungsgemäßen Durchbrüche und Befestigungsbohrungen erfindungsgemäße Grundelemente herzustellen. Dadurch werden die Kosten für die erfindungsgemäßen Grundelemente weiter reduziert und die als Plattenware hergestellten Grundelemente können beim Anwender problemlos in dessen Plattenlager eingelagert werden, bis sie verwendet werden.

Aus entsprechenden Zuschnitten von erfindungsgemäßen Grundelementen können ohne weiteres auch Vierkantrohre mit quadratischem oder rechteckigem Querschnitt, L-Winkelprofile, U-Profile, T-Profile und Doppel-T-Profile gebildet werden. Die auf diese Weise gebildeten Profilstücke sind sehr genau und weisen außerdem Befestigungsbohrungen auf.

Besonders vorteilhaft ist es auch, wenn das Grundelement als Vierkantrohr mit quadratischem oder rechteckigem Querschnitt hergestellt wird, da auf diese Weise säulenförmige Teile einer Vorrichtung durch einfaches Ablängen des Vierkantrohr hergestellt werden können. Da an der Oberfläche des Vierkantrohrs die erfindungsgemäße Durchbrüche und auch Befestigungsbohrungen mit den gleichen Abmessungen und dem gleichen Rastermaß wie auf den plattenförmigen Grundelementen vorhanden sind, können an dem Vierkantrohr weitere plattenförmige Grundelement oder Befestigungselemente nahezu in jeder Position problemlos angeordnet werden.

Es hat sich als vorteilhaft erwiesen, wenn die Durchbrüche durch Laserschneiden oder Schneiden hergestellt werden. Selbstverständlich können die Durchbrüche auch durch Stanzen, Feinstanzen oder spanende Bearbeitung hergestellt werden. Besonders vorteilhaft, weil sehr genau und kostengünstig, ist das Herstellen der Durchbrüche durch Laserschneiden oder Stanzen.

Alternativ ist es auch möglich, wenn geeignete Werkstoffe, wie zum Beispiel Aluminium, Kunststoffe oder Kupfer, eingesetzt werden, die erfindungsgemäßen Grundelemente durch Gießen oder Spritzen herzustellen.

Es hat sich als vorteilhaft erwiesen, wenn die Befestigungsbohrungen einen Durchmesser von 16 mm oder 28 mm aufweisen und/oder die ersten und zweiten Rasterlinien in einem Abstand von 50 mm oder 100 mm verlaufen. Dann nämlich sind die erfindungsgemäßen Grundelemente kompatibel zu anderen aus dem Stand der Technik bekannten Vorrichtungsbausystemen, so dass der Wechsel von einem Vorrichtungsbausystem auf das erfindungsgemäße Vorrichtungsbausystem einfach und ohne wirtschaftliche Nachteile vollzogen werden kann, da bereits vorhandene Befestigungselemente auch für das erfindungsgemäße Vorrichtungsbausystem eingesetzt werden können. Außerdem können sowohl das erfindungsgemäße Vorrichtungsbausystem mit dem aus dem Stand der Technik bekannten Schweißtische kombiniert werden.

Alternativ kann auch ein Befestigungselement für ein Vorrichtungsbausystem nach einem der vorhergehenden Ansprüche eingesetzt werden, wie es aus der EP 0 647 496 B2 bekannt ist. Zur Erläuterung der Merkmale dieses Befestigungselements wird auf die EP 0 647 496 B2 verwiesen.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarte Merkmale können sowohl einzeln als auch in beliebiger Kombination miteinander erfindungswesentlich sein.

### Zeichnung

Es zeigen:
- Figuren 1 bis 3: verschiedene Ausführungsbeispiele erfindungsgemäßer Grundelemente,
- Figuren 4: ein Beispiel für das Zusammenfügen verschiedener plattenförmiger Grundelemente in Explosionsdarstellung,
- Figuren 5 bis 7: ein als Vierkantrohr ausgeführtes Grundelement,
- Figur 8: ein Ausschnitt aus einem Grundelement in vergrößerter Darstellung,
- Figur 9: erfindungsgemäßes Kernelement,
- Figuren 10 bis 12: Ausführungsbeispiele verschiedener erfindungsgemäßer Eckverbinder.

### Beschreibung der Ausführungsbeispiele

In Figur 1 ist ein erstes Ausführungsbeispiel eines erfindungsgemäßen plattenförmigen Grundelements 1 in einer Draufsicht dargestellt. Über das Grundelement 1 ist ein Rasternetz gelegt, welches aus ersten Rasterlinien 3, die in Figur 1 in Längsrichtung des Grundelements 1 verlaufen, und zweiten Rasterlinien 5, die senkrecht zu den ersten Rasterlinien verlaufen, besteht. Der Abstand der Rasterlinien zueinander wird nachfolgend mit "S" bezeichnet. Aus Gründen der Übersichtlichkeit sind nicht alle Rasterlinien in Figur 1 eingetragen.

Die Kreuzungspunkte zwischen den ersten Rasterlinien 3 und den zweiten Rasterlinien 5 sind mit dem Bezugszeichen K und zwei Indizes versehen. Der erste Index steht für die Nummer der ersten Rasterlinie 3, während der zweite Index für die Nummer der zweiten Rasterlinie 5 steht. So hat beispielsweise der links unten befindliche Kreuzungspunkt das Bezugszeichen K_{1,1}. Der rechts davon befindliche Kreuzungspunkt hat das Bezugszeichen K_{2,1} und so weiter. Auf diese Weise kann jeder Kreuzungspunkt K eindeutig identifiziert werden.

Bei dem in Figur 1 dargestellten ersten Ausführungsbeispiel eines erfindungsgemäßen Grundelements 1 sind an jedem zweiten Kreuzungspunkt zwei Durchbrüche 7 und eine Befestigungsbohrung 9 vorhanden.

Die Durchbrüche 7 haben eine rechteckige Form und verlaufen parallel entweder zu einer ersten Rasterlinie 3 oder einer zweiten Rasterlinie 5. Beispiele für solche Kreuzungspunkte sind die Kreuzungspunkte K_{1,1}, K_{3,1} und K_{2,2}. Die zwischen diesen Kreuzungspunkten liegenden anderen Kreuzungspunkte, wie z. B. K_{1,2}, weisen weder eine Befestigungsbohrung 9 noch einen Durchbruch 7 auf. Dieses Muster erstreckt sich über die gesamte Fläche des plattenförmigen Grundelements 1.

Der Abstand der Rasterlinien 3 und 5 hat in Figur 1 das Bezugszeichen "S".

Es ist auch möglich, dass zusätzlich oder alternativ zu den Befestigungsbohrungen 9 an den Kreuzungspunkten K_{1,1}, K_{3,1} und K_{2,2} die Befestigungsbohrungen 9 an den zwischen diesen Kreuzungspunkten liegenden anderen Kreuzungspunkten K_{2,1}, K_{4,1}, K_{1,2} ... angeordnet sind. Allerdings sind in Figur 1 aus Gründen der Übersichtlichkeit nicht alle Befestigungsbohrungen 9 dargestellt.

An den Rändern des plattenförmigen Grundelements 1 wechselt sich ein Durchbruch 7 mit einem Vorsprung 11 ab. Dabei ist eine Länge L des Durchbruchs 7 gleich der Länge A des Vorsprungs 11. Dies bedeutet, dass man ein erstes plattenförmiges Grundelement 1 mit seiner Kante in Richtung einer ersten Rasterlinie 3 oder in Richtung einer zweiten Rasterlinie 5 in ein zweites nicht dargestelltes plattenförmiges Grundelement 1 einstecken kann. Dadurch ist es möglich, aus mehreren individuell zugeschnittenen Grundelementen 1 nahezu beliebige zwei- oder dreidimensionale Körper oder Vorrichtungen zu erstellen. Die einzige Restriktion besteht darin, dass die Grundelemente 1 nur entlang der Rasterlinien 3 und 5 miteinander verbunden werden können. Da jedoch die Rasterlinien 3 und 5 einen relativ geringen Abstand, von beispielsweise 50 mm haben, können mit dem erfindungsgemäßen Grundelement 1 nahezu beliebige zwei- oder dreidimensionale Körper gebaut werden.

Selbstverständlich müssen an den Kreuzungspunkten mit zwei Durchbrüchen 7 nicht immer eine Befestigungsbohrung 9 vorgesehen sein. Bei Bedarf kann zwischen den Durchbrüchen 7 an den "freien" Kreuzungspunkten, siehe zum Beispiel K_{2,1}, eine zusätzliche Befestigungsbohrung 9 vorgesehen werden.

An dem Kreuzungspunkt K_{2,3} ist exemplarisch ein rechteckiges Langloch 27 vorgesehen. Wichtig ist, dass dieses Langloch 27 an einem Kreuzungspunkt, jedoch nicht symmetrisch zu diesem Kreuzungspunkt, angeordnet ist. Das Langloch 27 beginnt beispielsweise an einer ersten Rasterlinie 3 und erstreckt sich in Richtung entweder der zweiten Rasterlinie 5 (nicht dargestellt im Kreuzungspunkt K_{2,3}). Die Länge dieses Langlochs 27 ist dann größer als die halbe Dicke D des plattenförmigen Grundelements 1. Bei Bedarf können auch mehrere Langlöcher 27 an einem Kreuzungspunkt in Form eines Kreuzes angeordnet werden. Dies ist am Kreuzungspunkt K_{4,1} der Fall.

Alternativ kann an einem Kreuzungspunkt auch eine Spannbohrung 28 vorgesehen sein (siehe zum Beispiel den Kreuzungspunkt K_{6,1}). Ein wichtiges Merkmal der Spannbohrung 28 ist, dass ihr Durchmesser größer ist als die Breite eines Durchbruchs 7 oder die Dicke D eines Grundelements 1. Die Funktion der Langlöcher 27 und der Spannbohrungen 28 wird nachfolgend im Zusammenhang mit den Figuren 17 bis 19 noch näher erläutert.

Es versteht sich von selbst, dass an jedem der freien Kreuzungspunkte des plattenförmigen Grundelements 1 ein Langloch 27, mehrere Langlöcher 27 und/oder eine Spannbohrung 28 vorgesehen sein können. Diese Langlöcher 27 und Spannbohrungen 28 sind nicht alle in Figur 1 dargestellt und ermöglichen es, aus einem plattenförmigen Grundelement 1 Eckverbinder 30 auszuschneiden, die mit den zu verbindenden plattenförmigen Grundelementen verbunden werden.

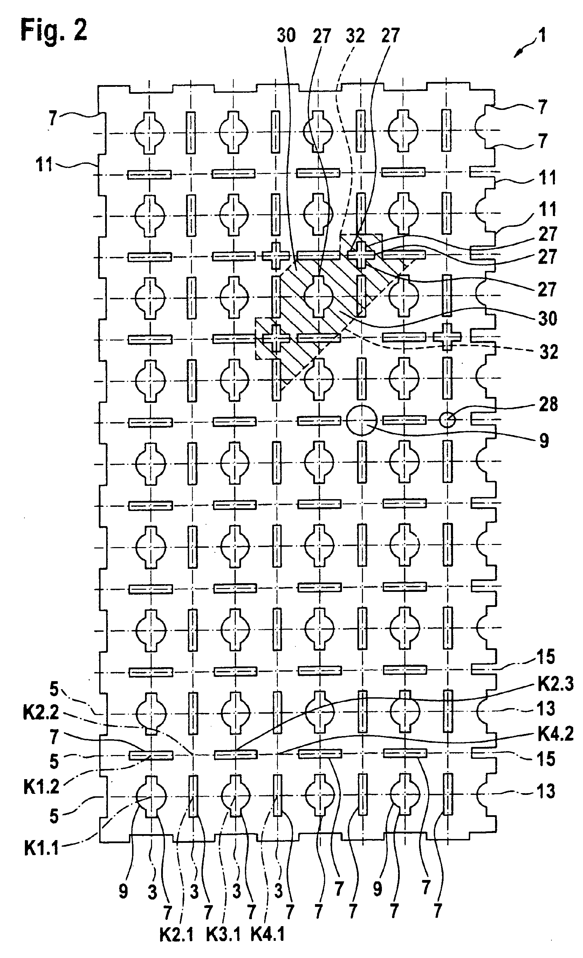

In Figur 2 ist ein zweites plattenförmiges Grundelement 1 dargestellt, das ebenfalls mit ersten Rasterlinien 3 und zweiten Rasterlinien 5 überzogen ist. Gleiche Bauteile haben das gleiche Bezugszeichen und es gilt das zu dem ersten Ausführungsbeispiel Gesagte entsprechend. Wie aus Figur 2 ersichtlich, gibt es zwei Typen von Kreuzungspunktlinien. Eine erste Kreuzungspunktlinie 13 fällt in Figur 2 mit der untersten zweiten Rasterlinie 5 zusammen. An jedem Kreuzungspunkt K_{1,1}, K_{2,1}, K_{3,1} ... dieser ersten Kreuzungspunktlinie 13 ist ein Durchbruch 7 vorhanden, wobei der Durchbruch 7 in Richtung der ersten Rasterlinie 3 verläuft. An jedem zweiten Kreuzungspunkt der ersten Kreuzungspunktlinie 13 ist bei diesem Ausführungsbeispiel eine Befestigungsbohrung 9 vorgesehen.

In der darüber liegenden zweiten Kreuzungspunktlinie 15 ist nur an jedem zweiten Kreuzungspunkt ein Durchbruch 7 vorhanden, wobei die Durchbrüche 7 in Richtung der zweiten Rasterlinien 5 verlaufen. Dieser Wechsel von ersten Kreuzungspunktlinien 13 und zweiter Kreuzungspunktlinie 15 wiederholt sich mehrfach. Aus Gründen der Übersichtlichkeit sind auch in Figur 2 nicht alle Rasterlinien, alle Kreuzungspunktlinien, alle Durchbrüche 7 und alle Befestigungsbohrungen 9 mit Bezugszeichen versehen.

Auch bei diesem zweiten Ausführungsbeispiel sind die Kanten des Grundelements 1 so in das erfindungsgemäße Muster gelegt, dass immer ein Durchbruch 7 im Wechsel mit einem Vorsprung 11 vorhanden ist. Dadurch kann auch dieses Ausführungsbeispiel eines erfindungsgemäßen Grundelements 1 in ein anderes Grundelement 1 entlang der ersten Rasterlinien 3 oder der zweiten Rasterlinien 5 eingesteckt werden. Auch bei diesem Ausführungsbeispiel ist die Länge L der Durchbrüche 7 gleich der Länge A der Vorsprünge 11 (siehe Figur 1).

Im oberen Teil der Figur 2 sind eine Spannbohrung 28 sowie mehrere Langlöcher 27 eingezeichnet. Wenn insgesamt ein Langloch 27 oder eine Spannbohrung 28 an einem "freien" Kreuzungspunkt vorhanden ist, kann aus dem plattenförmigen Grundelement 1 ein Eckverbinder 30 ausgeschnitten werden. Eine Schnittkante 32, entlang der das plattenförmige Grundelement 1 ausgeschnitten werden muss, um einen Eckverbinder 30 zu erhalten, ist in Figur 2 als gestrichelte Linie dargestellt. Dieser in Figur 2 eingezeichnete Eckverbinder 30 entspricht im Wesentlichen dem in Figur 18 dargestellten Eckverbinder 30.

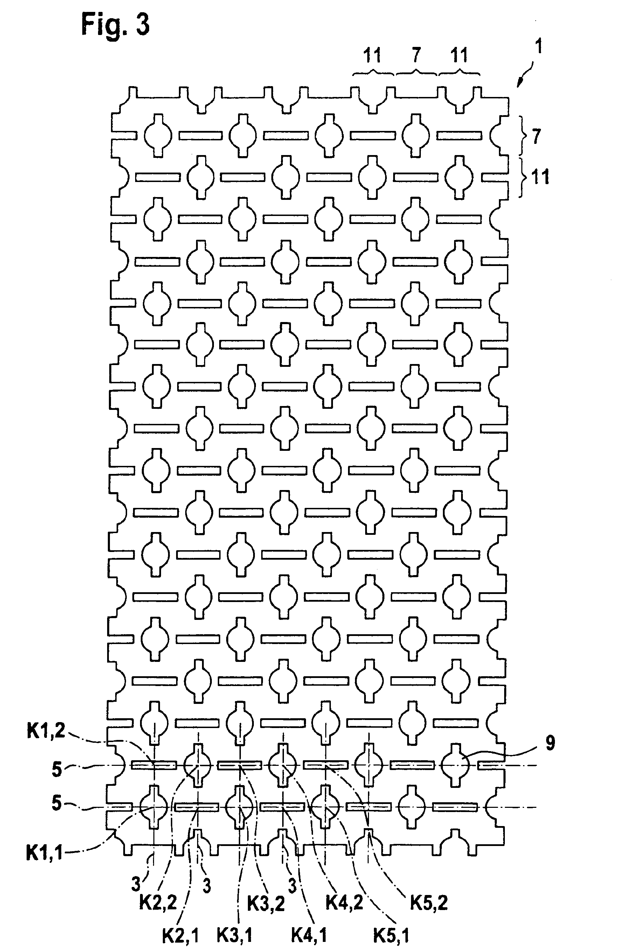

In Figur 3 ist ein drittes Ausführungsbeispiel eines erfindungsgemäßen Grundelements 1 dargestellt. Bei diesem Ausführungsbeispiel ist an jedem Kreuzungspunkt K ein Durchbruch 7 vorgesehen, wobei die Durchbrüche 7 abwechselnd einmal in Richtung einer ersten Rasterlinie 3 und anschließend in Richtung einer zweiten Rasterlinie 5 verlaufen. Zusätzlich ist an jedem zweiten Kreuzungspunkt eine Befestigungsbohrung 9 vorgesehen. Die Kanten des Grundelements 1 sind auch bei diesem Ausführungsbeispiel so gelegt, dass sich ein Durchbruch 7 und ein Vorsprung 11 abwechseln.

Mit Hilfe der in den Figuren 1 bis 3 dargestellten plattenförmigen Grundelemente 1 kann innerhalb des durch die ersten Rasterlinien 3 und die zweiten Rasterlinien 5 vorgegebenen Rastermaßes jeder beliebige rechtwinklige Körper aufgebaut werden, indem mehrere plattenförmige Grundelemente 1 mit einem nach einem der Ausführungsbeispiele gemäß Figur 1, Figur 2 und/oder Figur 3 auf das entsprechende Maß abgeschnitten und mit anderen plattenförmigen Grundelementen 1 zusammengesteckt wird. Dabei ist beim Ausschneiden von Grundelementen 1 aus einer Platte darauf zu achten, dass sich an der Schnittkante immer ein Vorsprung 11 und ein Durchbruch 7 abwechseln.

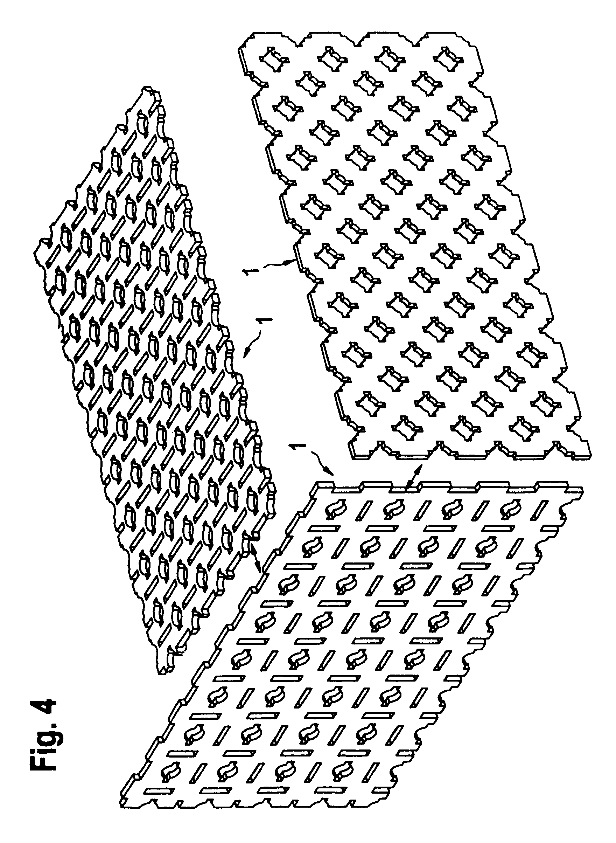

In Figur 4 ist ein Beispiel für das Fügen einer Eckverbindung aus drei plattenförmigen Grundelementen in Explosionsdarstellung dargestellt. Durch die in Figur 4 eingezeichneten Doppelpfeile ist die Fügerichtung angedeutet.

Aus Figur 4 wird deutlich, dass die verschiedenen Ausführungsbeispiele erfindungsgemäßer Grundelemente 1 nach den Figuren 1, 2 und 3 miteinander gefügt werden können. Das in Figur 4 rechts unten gezeichnete plattenförmige Grundelement 1 entspricht beispielsweise dem ersten Ausführungsbeispiel gemäß Figur 1, während die anderen beiden plattenförmigen Grundelemente 1 dem Ausführungsbeispiel gemäß Figur 3 entsprechen. Aus diesem Zusammenbaubeispiel wird deutlich, dass rechteckige oder quadratische Körper beliebiger Abmessungen innerhalb des Rastermaßes mit Hilfe der plattenförmigen Grundelemente 1 gefügt werden können. Dabei sind alle drei Ausführungsbeispiele gemäß den Figuren 1 bis 3 miteinander kompatibel. Die Auswahl eines bestimmten Ausführungsbeispiels hängt unter anderem davon ab, an welcher Rasterlinie (nicht eingetragen in Figur 4) zwei plattenförmige Grundelemente 1 gefügt werden sollen.

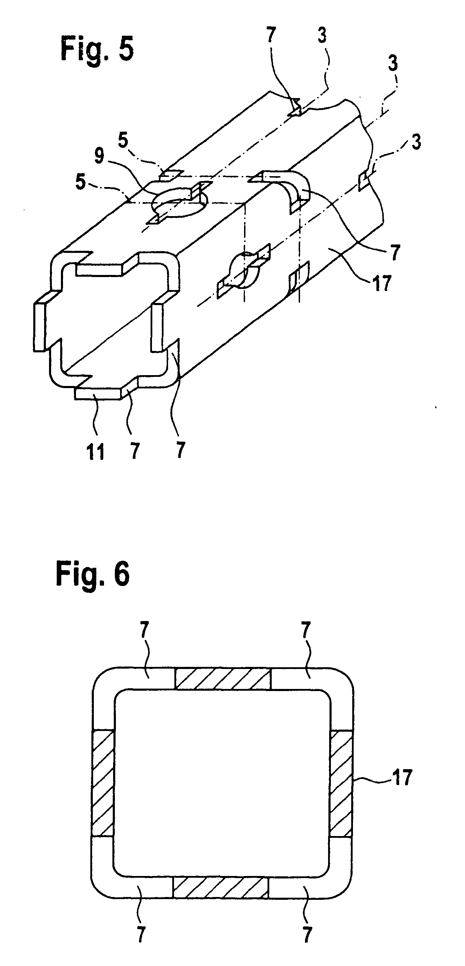

In den Figuren 5 bis 7 ist ein weiteres Ausführungsbeispiel eines erfindungsgemäßen Grundelements dargestellt. Dieses Grundelement ist als Vierkantrohr 17 ausgebildet. Auch hier ist eine regelmäßige Folge von Durchbrüchen 7 entlang erster Rasterlinien 3 und zweiter Rasterlinien 5 vorhanden. Bei diesem Ausführungsbeispiel sind manche der ersten Rasterlinien 3 an einer Kante des Vierkantrohrs 17 angeordnet. Dieses Vierkantrohr 17 kann auch aus vier streifenförmigen Zuschnitten aus einem Grundelement 1 zusammengesetzt werden, so dass je nach Bedarf ein Vierkantrohr 17 mit den gewünschten Abmessungen hergestellt werden kann.

Die zweiten Rasterlinien 5 sind als geschlossener quadratischer Linienzug ausgebildet, der um das Vierkantrohr 17 herum verläuft. Es versteht sich von selbst, dass nicht nur quadratische Vierkantrohre 17, sondern auch rechteckige Vierkantrohre (nicht dargestellt) möglich und von der Erfindung umfasst sind.

Am Ende des Vierkantrohrs 17 wechseln sich, wie bei den anderen Ausführungsbeispielen (siehe Figuren 1 bis 3) auch, Durchbrüche 7 und Vorsprünge 11 ab. Das Muster an Durchbrüchen 7 und Befestigungsbohrungen 9 des in Figur 4 dargestellten Vierkantrohrs 17 entspricht dem in Figur 2 dargestellten Ausführungsbeispiel. Allerdings sind auch Vierkantrohre 17 mit den Mustern des ersten und des dritten Ausführungsbeispiels (siehe Figuren 1 und 3) möglich.

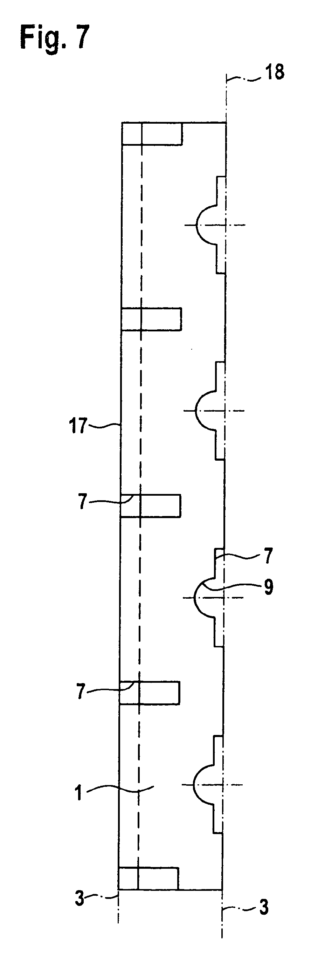

Figur 6 zeigt einen Schnitt durch ein Vierkantrohr 17 entlang einer zweiten Rasterlinie 5. In Figur 7 ist eine Seitenansicht eines Vierkantrohrs 17 dargestellt. In Figur 7 ist nur eine Hälfte eines Vierkantrohrs dargestellt, da die andere Hälfte symmetrisch ausgebildet ist. Man kann sie durch spiegeln entlang einer Symmetrielinie 18, die mit einer ersten Rasterlinie 3 zusammenfällt, vervollständigen.

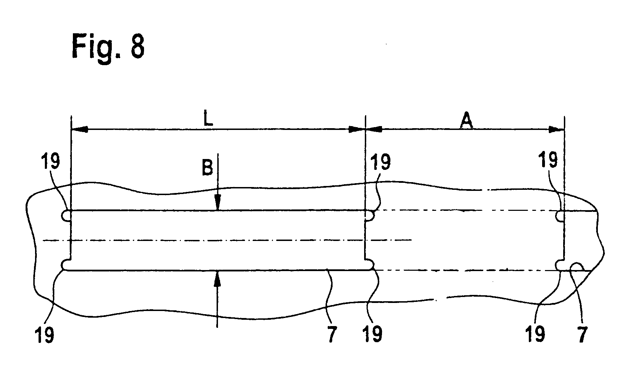

In Figur 8 ist ein Durchbruch 7 vergrößert dargestellt. Aus dieser vergrößerter Darstellung ergibt sich, dass die Ecken des Durchbruchs 7 durch einen Radius 19 ausgespart sind, wobei der Radius 19 die Funktion eines Freistichs hat. Durch die Radien 19 ist gewährleistet, dass eine formschlüssige Verbindung zwischen zwei plattenförmigen Grundelementen 1 nicht in den Ecken eines Durchbruchs 7, sondern ausschließlich entlang der geraden Kanten des rechteckigen Durchbruchs 7 erfolgt.

Die Länge des Durchbruchs 7 ist mit dem Bezugszeichen L versehen, während die Breite mit dem Bezugszeichen B versehen wurde. Der Abstand zwischen zwei benachbarten Durchbrüchen 7 ist in Figur 8 mit A bezeichnet. Wenn eine Platte entlang einer strichpunktierten dargestellten Schnittlinie zwischen zwei Durchbrüchen 7 abgeschnitten wird, ergibt sich zwischen zwei Durchbrüchen 7 jeweils ein Vorsprung 11 (siehe Figur 1). Dabei ist anzumerken, dass der Abstand A gleich der Länge L sein sollte und die Figur 8 die Längenverhältnisse nicht maßstäblich wiedergibt.

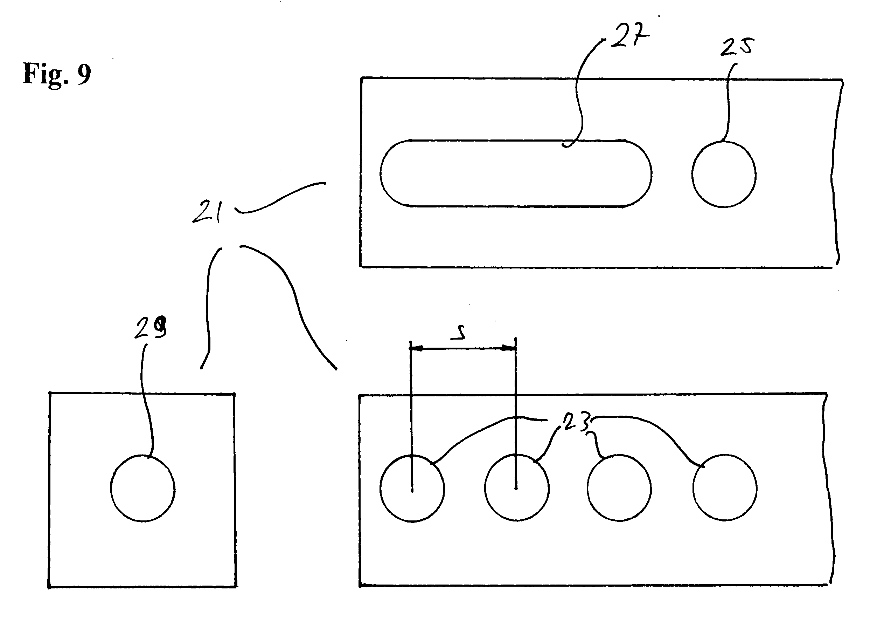

In Figur 9 ist ein Ausführungsbeispiel eines erfindungsgemäßen Kernelements 21 in verschiedenen Ansichten dargestellt. Aus der Zusammenschau dieser Ansichten ergibt sich, dass das Kernelement 21 als prismatischer Körper mit einem quadratischen Querschnitt ausgeführt ist. Selbstverständlich können auch rechteckige Querschnitte gewählt werden.

Außerdem ergibt sich aus Figur 9, dass das Kernelement 21 in allen drei Raumesrichtungen mit Bohrungen versehen ist. In der Seitenansicht sind vier erste Bohrungen 23 dargestellt, die parallel zueinander verlaufen und deren Abstand S zueinander dem Rastermaß der Grundelemente 1 (siehe Fig. 1) entspricht.

In der Ansicht von unten ist eine zweite Bohrung 25 dargestellt, die senkrecht zu den ersten Bohrungen 23 verläuft. Neben der zweiten Bohrung 25 ist ein Langloch 27 ausgespart. Mit Hilfe des Langlochs 27 ist es möglich, das Kernelement 21 unabhängig von dem Rastermaß S zu positionieren oder andere Bauteile an dem Kernelement 21 in nahezu jeder beliebigen Position zu befestigen.

In der Ansicht von vorne ist nur eine dritte Bohrung 29 vorgesehen, die sich über die gesamte Länge des Kernelements 21 erstrecken kann. Sobald die Länge der Kernelemente 21 jedoch eine gewisse Länge überschreitet, wird die dritte Bohrung 29 in der Regel als Sackloch ausgeführt.

Das Kernelement 21 kann zum Versteifen einer aus Grundelementen 1 aufgebauten Vorrichtung dienen. Des Weiteren können mit Hilfe des Kernelements 21 auch verstellbare Winkel und anderes mehr gebaut werden.

Wenn die Anforderungen an die Präzision der Vorrichtung in bestimmten Bereichen sehr hoch ist, kann durch den Einsatz hochpräzise gefertigter Kernelemente 21 die Genauigkeit der Vorrichtung gegenüber den plattenförmigen Grundelementen 1 erhöht werden.

Selbstverständlich ist es auch möglich, ein Kernelement 21 als Platte auszuführen, so dass durch die Verwendung von zwei übereinander gelegten Grundelementen 1, zwischen denen sich ein plattenförmiges Kernelement 21 befindet, eine extrem stabile und präzise Grundplatte ergibt.

Es hat sich als vorteilhaft erwiesen, wenn das Kernelement 21 einen Querschnitt von 45 mm x 45 mm aufweist und der Rasterabstand S der ersten Bohrungen 23, der zweiten Bohrungen 25 und/oder der dritten Bohrungen 29 gleich 25 mm ist. Bei dem Durchmesser der ersten Bohrungen 23, der zweiten Bohrungen 25 und/oder der dritten Bohrungen 29 hat sich eim Maß von 16 mm als vorteilhaft erwiesen.

Selbstverständlich muss das Kernelement nicht aus dem gleichen Material wie die Grundelemente hergestellt werden. Dadurch ergeben sich Vorteile bezüglich der Herstellungskosten, aber auch Gewichtsvorteile, beispielsweise wenn das Kernelement 21 aus Aluminium hergestellt ist und die Grundelemente 1 aus Stahl hergestellt werden.

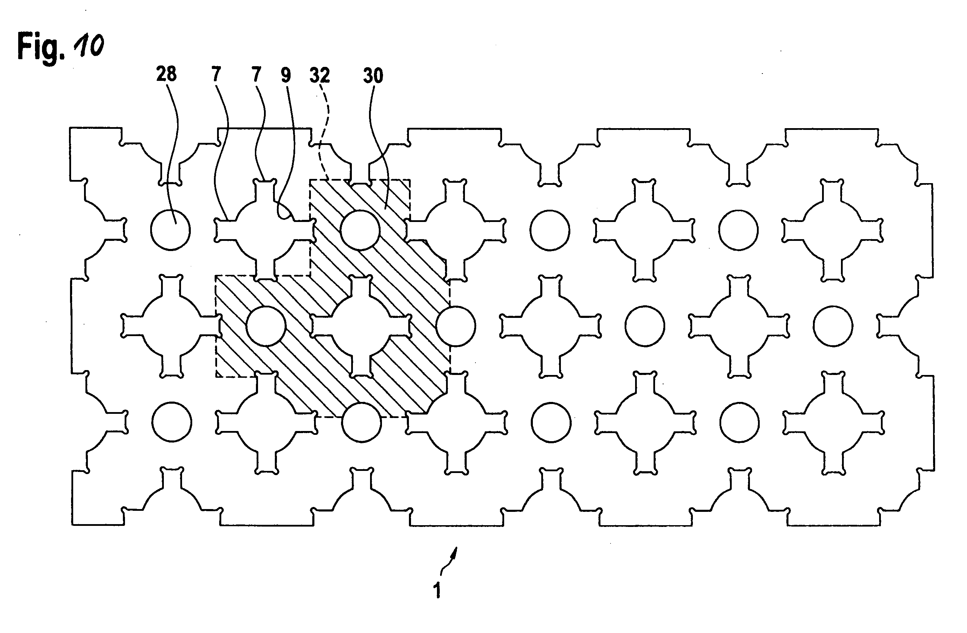

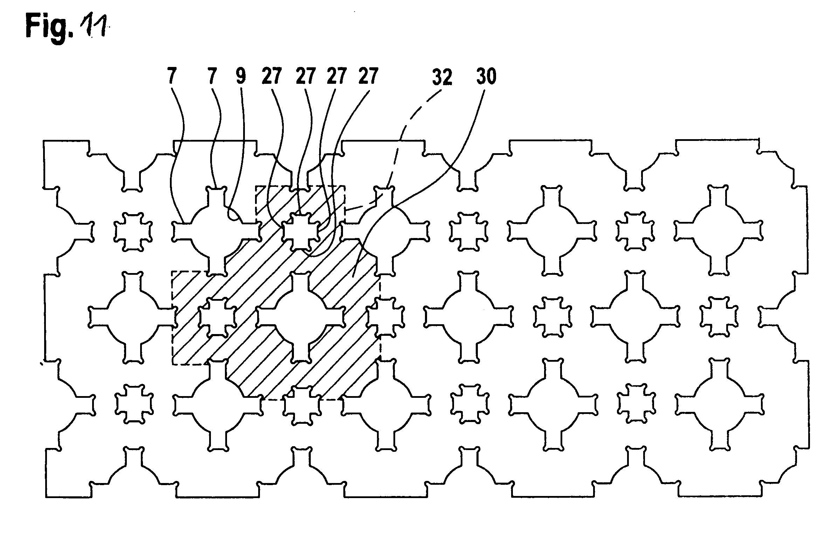

In Figur 10 ist ein weiteres Ausführungsbeispiel eines Eckverbinders 30 dargestellt, welches nachfolgend im Zusammenhang mit der Figur 11 noch näher erläutert wird.

Der in Figur 10 dargestellte Eckverbinder 30 ist eine Variante des in Figur 1 dargestellten Eckverbinders 30. Bei dieser Variante ist an jedem der freien Kreuzungspunkte ein Spannloch 28 vorgesehen. Der Durchmesser der Spannlöcher 28 ist größer als die Dicke D des plattenförmigen Grundelements und damit auch größer als die Breite eines Durchbruchs 7. In Figur 10 ist eine Schnittkante 32 eingezeichnet, entlang derer ein Schnitt durchgeführt werden muss, um den in Figur 10 schraffiert dargestellten Eckverbinder 30 zu erhalten.
Auch anhand dieses Ausführungsbeispiels wird deutlich, dass ohne Änderungen des Grundelements 1 diese Eckverbinder 30 aus dem Grundelement 1 bei Bedarf herausgeschnitten werden können. Somit ist eine Lagerhaltung nicht zwingend erforderlich.
In Figur 11 ist eine weitere Variante des in Figur 1 dargestellten plattenförmigen Grundelements dargestellt, bei dem an jedem freien Kreuzungspunkt vier kreuzförmig angeordnete Langlöcher 27 vorhanden sind. Auch aus diesem plattenförmigen Grundelement 1 kann ein Eckverbinder 30 ausgeschnitten werden.

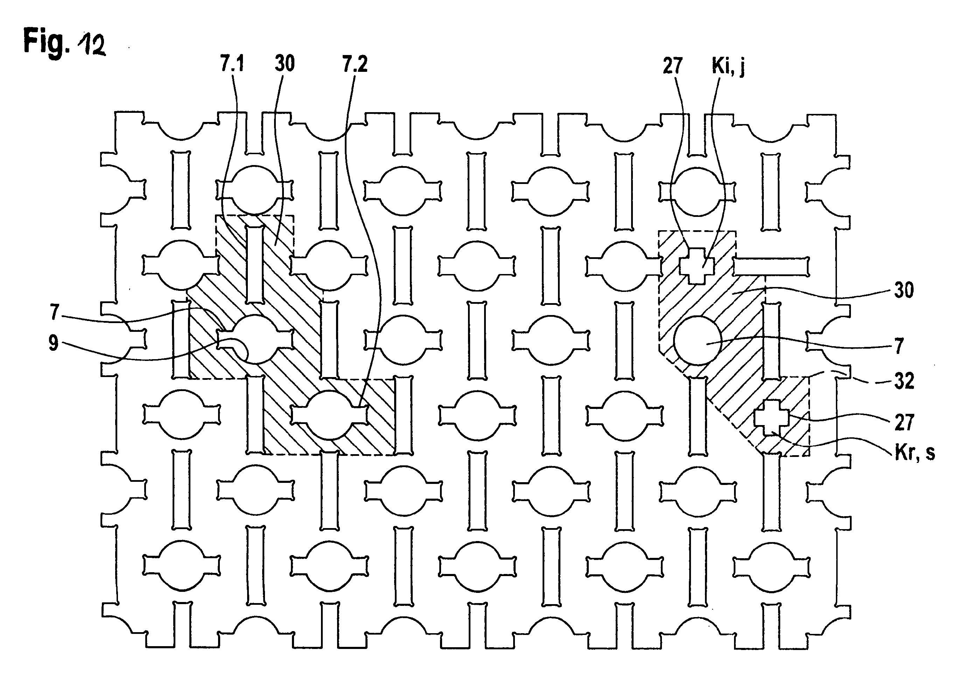

In Figur 12 ist ein plattenförmiges Grundelement 1 gemäß Figur 3 dargestellt. Im linken Teil der Figur 22 ist ein Eckverbinder 30 schraffiert dargestellt. Bei diesem Eckverbinder 30 übernehmen die mit den Bezugszeichen 7.1 und 7.2 versehenen Durchbrüche die Funktion eines Langlochs.. In diese Langlöcher können Spannkeile (nicht dargestellt) eingeschlagen werden , um eine Klemmverbindung zwischen dem Eckverbinder 30 und einem Grundelement 1 (nicht dargestellt) herzustellen.

Im rechten Teil der Figur 11 ist das Schema des Grundelements 1 etwas dahingehend variiert, dass an einem Kreuzungspunkt K_{i,j} anstelle eines Durchbruchs 7 (nicht dargestellt) mehrere Langlöcher 27, von denen nicht alle mit Bezugszeichen versehen wurden, vorgesehen sind. An einem weiteren Kreuzungspunkt K_{r,s} sind ebenfalls anstelle eines Durchbruchs 7 mehrere Langlöcher 27 vorgesehen.

Schließlich ist an der Befestigungsbohrung 9, die sich in unmittelbarer Nachbarschaft zu dem Kreuzungspunkt K_{i,j} befindet, kein Durchbruch 7 vorgesehen. Diese im rechten Teil der Figur 11 dargestellte Ausführungsform eines Eckverbinders 30 entspricht weitgehend dem in Figur 19 dargestellten Ausführungsbeispiel, welches lediglich ein Langloch 27 anstelle von vier kreuzförmig angeordneten Langlöchern 27 (siehe rechter Teil von Figur 11) aufweist.

Wenn der Abstand der ersten Rasterlinien 3 und der zweiten Rasterlinien 5 gleich 50 mm ist und der Durchmesser der Befestigungsbohrungen 9 gleich 16 mm ist, ist das erfindungsgemäße Vorrichtungsbausystem kompatibel mit dem in der EP 0 541 904 A1 beschriebenen Schweißtisch und den Befestigungselementen der gleichen Anmelderin, die beispielsweise in der EP 0 647 496 A2 oder B2 beschrieben sind.

## Patentansprüche

1. Plattenförmiges Grundelement für ein Vorrichtungsbausystem mit mehreren gleichmäßig voneinander beabstandeten ersten Rasterlinien (3), mit mehreren gleichmäßig voneinander beabstandeten zweiten Rasterlinien (5), wobei die ersten Rasterlinien (3) mit den zweiten Rasterlinien (5) einen Winkel von 90° einschließen, mit mehreren gleichmäßig voneinander beabstandeten Befestigungsbohrungen (9), **dadurch gekennzeichnet, dass** an mehreren Kreuzungspunkten (K_{i,j}, mit i = 1 bis n und j = 1 bis m) der Rasterlinien (3, 5) mindestens ein rechteckiger Durchbruch (7) vorgesehen ist.

2. Grundelement nach Anspruch 1, **dadurch gekennzeichnet, dass** an jedem zweiten Kreuzungspunkt (K_{1,1}, K_{3,1}, K_{2,2}, K_{4,2}, K_{1,3}, K_{3,1},...) zwei rechtwinklig zueinander verlaufende Durchbrüche (7) vorgesehen sind (Figur 1).

3. Grundelement nach Anspruch 2, **dadurch gekennzeichnet, dass** an den anderen Kreuzungspunkten (K_{2,3}, K_{5,2}, K_{6,1}, ...) mindestens ein Langloch (27) oder eine Spannbohrung vorgesehen ist (Figuren 1 und 12).

4. Grundelement nach Anspruch 1, **dadurch gekennzeichnet, dass** die Kreuzungspunkte (K_{1,1}, K_{2,1}, K_{3,1}, K_{4,1}, ...) aller ersten Rasterlinien (3) mit einer zweiten Rasterlinie (5) eine erste Kreuzungspunktlinie (13) bilden, dass an jedem Kreuzungspunkt (K_{1,1}, K_{2,1}, K_{3,1}, K_{4,1}, ...) der ersten Kreuzungspunktlinie (13) ein in Richtung der ersten Rasterlinie (3) verlaufender Durchbruch (7) angeordnet ist, dass die benachbart zu der ersten Kreuzungspunktlinie (13) angeordneten Kreuzungspunkte (K_{1,2}, K_{2,2}, K_{3,2}, K_{4,2}, ...) aller ersten Rasterlinien (3) mit einer zweiten Rasterlinie (5) eine zweite Kreuzungspunktlinie (15) bilden, dass an jedem zweiten Kreuzungspunkt (K_{1,2}, K_{3,2}, K_{5,2}, ...) der zweiten Kreuzungspunktlinie (15) ein in Richtung der zweiten Rasterlinie (5) verlaufender Durchbruch (7) angeordnet ist, und dass sich erste Kreuzungspunktlinien (13) und zweite Kreuzungspunktlinien (15) abwechseln (Figur 2).

5. Grundelement nach Anspruch 4, **dadurch gekennzeichnet, dass** an den verbleibenden Kreuzungspunkten (K_{2,2}, K_{4,2}, K_{6,2}, ...) der zweiten Kreuzungspunktlinie (15) mindestens ein Langloch (27) und/oder eine Spannbohrung (28) vorgesehen ist (Figur 2).

6. Grundelement nach Anspruch 1, **dadurch gekennzeichnet, dass** an jedem Kreuzungspunkt (K_{1,1}, K_{2,1}, K_{3,1}, K_{4,1}, K_{1,2}, K_{2,2}, K_{3,2}, K_{4,2}, ...) ein Durchbruch (7) vorgesehen ist, und dass die Durchbrüche abwechselnd in Richtung der ersten Rasterlinien (3) und in Richtung der zweiten Rasterlinien (5) verlaufen (Figur 3).

7. Grundelement nach Anspruch 6, **dadurch gekennzeichnet, dass** an einem Kreuzungspunkt (K_{i,j}) anstelle eines Durchbruchs (7) mindestens ein Langloch (27) oder eine Spannbohrung (28) vorgesehen ist, dass einem weiteren Kreuzungspunkt (K_{r,s}) anstelle eines Durchbruchs (7) mindestens ein Langloch (27) oder eine Spannbohrung (28) vorgesehen ist, und dass gilt r = i +/- 1, und s = j +/-2. (Figur 21).

8. Grundelement nach Anspruch 6, **dadurch gekennzeichnet, dass** benachbart zu dem mindestens einem Langloch (27) oder der Spannbohrung (28) anstelle eines Durchbruchs (7) eine Befestigungsbohrung (9) vorgesehen ist. (Figur 21).

9. Grundelement nach einem der vorhergehenden Ansprüche, **dadurch gekennzeichnet, dass** ein Abstand (S) der Rasterlinien voneinander einem ganzzahligen Vielfachen einer Dicke (D) des Grundelements, insbesondere dem dreifachen, dem fünffachen oder dem siebenfachen der Dicke (D), entspricht.

10. Grundelement nach einem der vorhergehenden Ansprüche, **dadurch gekennzeichnet, dass** eine Längsachse der Durchbrüche (7) parallel zu einer Rasterlinie (3, 5) verläuft.

11. Grundelement nach einem der vorhergehenden Ansprüche, **dadurch gekennzeichnet, dass** eine Breite (B) der Durchbrüche (7) einer Dicke (D) des Grundelements (1) entspricht.

12. Grundelement nach einem der vorhergehenden Ansprüche, **dadurch gekennzeichnet, dass** eine Länge (L) der Durchbrüche (7) einem ganzzahligen Vielfachen der Dicke (D) des Grundelements (1) (D), insbesondere dem dreifachen, dem fünffachen oder dem siebenfachen der Dicke (D), entspricht.

13. Grundelement nach einem der vorhergehenden Ansprüche, **dadurch gekennzeichnet, dass** die Ecken der Durchbrüche (7), insbesondere mittels eines Radius' (19), ausgespart sind.

14. Grundelement nach einem der vorhergehenden Ansprüche, **dadurch gekennzeichnet, dass** die Befestigungsbohrungen (9) zueinander den gleichen Abstand (S) wie die Rasterlinien (3, 5) oder ein ganzzahliges Vielfaches des Abstands (S) der Rasterlinien (3, 5) aufweisen.

15. Grundelement nach einem der vorhergehenden Ansprüche, **dadurch gekennzeichnet, dass** die Befestigungsbohrungen (9) auf mindestens einer Rasterlinie (3, 5) angeordnet sind.

16. Grundelement nach einem der Ansprüche 1 bis 14, **dadurch gekennzeichnet, dass** die Befestigungsbohrungen (9) zwischen den Rasterlinien (3, 5) angeordnet sind.

17. Grundelement nach einem der vorhergehenden Ansprüche, **dadurch gekennzeichnet, dass** aus Zuschnitten von erfindungsgemäßen Grundelementen Profilstücke, insbesondere Vierkantrohre mit quadratischem oder rechteckigem Querschnitt, L-Winkelprofil, U-Profil, T-Profil und/oder Doppel-T-Profil, gebildet werden.

18. Grundelement nach einem der vorhergehenden Ansprüche, **dadurch gekennzeichnet, dass** die Durchbrüche durch Laserschneiden, spanende Bearbeitung, Schneiden, oder Stanzen, insbesondere Feinstanzen, hergestellt werden.

19. Grundelement nach einem der Ansprüche 1 bis 19, **dadurch gekennzeichnet, dass** das Grundelement durch Gießen, insbesondere Feingießen, hergestellt werden. Grundelement nach einem der vorhergehenden Ansprüche, **dadurch gekennzeichnet, dass** die Befestigungsbohrungen (9) einen Durchmesser von 16 mm oder 28 mm aufweisen.

20. Grundelement nach einem der vorhergehenden Ansprüche, **dadurch gekennzeichnet, dass** die ersten und zweiten Rasterlinien (3, 5) in einem Abstand (S) von 50 mm oder 100 mm verlaufen.

21. Grundelement nach einem der vorhergehenden Ansprüche, **dadurch gekennzeichnet, dass** die Befestigungsbohrungen (9) mindestens teilweise angesenkt sind.

22. Verbindungselement für ein Vorrichtungsbausystem nach einem der Ansprüche 1 bis 23, **dadurch gekennzeichnet, dass** das Befestigungselement (23) ein Gehäuse aufweist und mit einer axial verlaufenden Gewindespindel versehen ist, welche drehfest mit einem nach außen herausgeführten Handgriff verbunden ist, welcher als äußeres Spannmittel vorgesehen ist, wobei die Gewindespindel an ihrem anderen Ende mit einem zylinderförmigen Teil versehen ist, welcher an Verhakungsmitteln angreift, wobei beim Eindrehen der Gewindespindel in das Gehäuse die Verhakungsmittel in radialer Richtung aus dem Befestigungselement herausgedrückt und dann vom zylinderförmigen Teil in dieser Position gehalten werden, wobei das Gehäuse mit einer Umfangsnut versehen ist, in welche ein Gummiring oder dergleichen eingelegt ist, der beim Drehen des Handgriffs ein Bremsmoment zwischen Gehäuse und Befestigungsbohrung ausübt, wobei als Verhakungsmittel Kugeln vorgesehen sind, welche in radialen Bohrungen des Gehäuses gelagert sind und wobei die radialen Bohrungen zur Aufnahme der Kugeln an ihrer Gehäuseaußenseite wenigstens punktförmig angestaucht sind.

23. Eckverbinder zum Verbinden zweier senkrecht ineinander gesteckter Grundelement (1), **dadurch gekennzeichnet, dass** er aus einem Grundelement nach einem der Ansprüche 1 bis 23 ausschneidbar ist.

24. Kernelement für ein Grundelement (1) oder einen Eckverbinder (30) nach einem der vorhergehenden Ansprüche, **dadurch gekennzeichnet, dass** das Kernelement (21) einen quadratischen oder rechteckigen Querschnitt aufweist, und dass das Kernelement (21) parallel zueinander verlaufende erste Bohrungen (23) aufweist, deren Abstand zueinander dem einfachen oder einem Vielfachen des Abstands (S) der ersten und zweiten Rasterlinien (3, 5) zueinander entspricht.

25. Kernelement nach Anspruch 26, **dadurch gekennzeichnet, dass** mindestens eine senkrecht zu den ersten Bohrungen (23) verlaufende zweite Bohrung (25) vorhanden ist.

26. Kernelement nach Anspruch 26 oder 27, **dadurch gekennzeichnet, dass** mindestens eine senkrecht zu den ersten Bohrungen (23) und der mindestens einen zweiten Bohrung (25) verlaufende dritte Bohrung (29) vorhanden ist.

27. Kernelement nach einem der Ansprüche 26 bis 28, **dadurch gekennzeichnet, dass** mindestens eine der ersten Bohrungen (23), eine der zweiten Bohrungen (25) und/oder eine der dritten Bohrungen (27) als Langloch (27) ausgebildet ist.
